# EUROPEAN PATENT APPLICATION

(11) **EP 4 738 316 A1**
(43) Date of publication of application: **06.05.2026**
(21) Application number: 25212167.8
(22) Date of filing: 29.10.2025
(51) Int. Cl.: G09B 9/00, A63B 9/00, A63B 69/00, A63B 71/02

(54) **STRUCTURE FOR RECREATIONAL, DEMONSTRATIVE AND TRAINING ACTIVITIES IN TREE CLIMBING**

(30) Priority: 30.10.2024 IT 202400024237
(71) Applicant: Camp S.p.A., 23834 Premana (Lecco) (IT)
(72) Inventor: CODEGA, Antonio, PREMANA (LC) (IT); FIORI, Giorgio, PREMANA (LC) (IT)
(74) Representative: Croce, Valeria

(57) **Abstract**

The present invention concerns an artificial demonstrative and training structure for *tree climbing* activities (1) comprising a central metal element (2) which develops along a longitudinal axis y from a lower end (2') to an upper end (2") fixed to a base (3) by means of appropriate means of connection (4), and one or more first lateral elements (5) in metal, each of which develops independently of the others along its own longitudinal axis w, said one or more first lateral elements (5) being connected to the central element (2) by means of appropriate first means of lateral connection (6), and second lateral elements (7) of wood or wood-like material, each of which develops independently of the others along its own longitudinal axis z, said one or more second lateral elements (6) being connected to the central element (2) by means of appropriate second means of lateral connection (8), wherein those first means of lateral connection (6) and those second means of lateral connection (8) allow to connect respectively and independently to each other one or more first lateral elements (5) and one or more second lateral elements (7) at different heights of that central metal element (2) along the longitudinal axis y and/or at different inclinations with respect to the longitudinal axis y.

## Description

### Background

To date, most of the training courses for *tree climbing* are carried out outdoors, on real plants, with problems related to the repeatability of operations, the difficulty of transferring all the techniques for all types of plants and situations, the limited possibilities of making cuts, and weather conditions.

Some existing training centers have structures for *tree climbing,* which are essentially divided into two types:
- natural trunks, cut and repositioned inside the structure: they present the problems of not offering the possibility of branches (drying out over time they would not be resistant), rapid degradation and the impossibility of making cuts;
- artificial structures, which in some way simulate a trunk with branches, but without exactly replicating its conformation and without offering the possibility of cutting.

The prior-art document US 2007/051038 disclosed an artificial structure that replicates plants for hornamental purposes and comprises live plants, maintained by irrigation systems.

The well-known prior-art document GB 2,621,614 discloses a structure that accurately replicates a palm tree, on which it is possible to climb using a belay system.

In the art, therefore, there is a lack of a training structure capable of replicating the activities described above, carried out in such a way as to artificially replicate the real situations that the *tree climber* encounters in the natural environment.

### Summary of the invention

The purpose of the present invention is to provide an artificial structure and a complex artificial structure intended for demonstration and training in tree climbing, which allows the following demonstration and training possibilities:
- climbing on plants and progression on branches with rope access techniques, whether they are work or recreational;
- climbing on logs with progression techniques with crampons;
- pruning and cutting operations;
- operations of felling the top of the trunk;
- operations of removal of branches or portions of trunk through crane or helicopter simulation;
- removal of branches or portions of trunks by means of cableways;
- plan access operations through elevating work platforms.

These goals are achieved by an artificial demonstrative and formative structure in accordance with claims 1 and 15.

Further advantageous embodiments of the artificial demonstrative and training structure of the invention form the object of the respective dependent claims.

### Brief description of the figures

The characteristics and advantages of the present invention will be clearer from the description of some of its preferred embodiments, illustrated below by way of example and not exhaustively, with reference to the attached figures, wherein:
Figure 1 is a perspective view of the artificial structure of the invention, showing its main structural elements;
Figure 2 is a view of the base of the artificial structure of the invention, highlighting the details of the fixing of the trunk to the ground and the means of friction at the base for anchoring the rope;
Figure 3 shows in detail an example of the means of fixing the adjustable branches: the flanges on the trunk allow the variation of the angular position, while the pin and bolts at the base of the branch allow the adjustment of the inclination;
Figure 4 shows the insertion in a fixed position of a wooden branch in a metal pipe fixed inside the main metal trunk;
Figure 5 shows the upper part of the main trunk;
Figure 6 depicts a primary metal branch with secondary metal branches attached, which can accommodate parts of wooden branches;
Figure 7 is a perspective view of a second alternative embodiment of the invention's artificial structure, with a log covered with wood (Figure 8) and a wooden top secured via a removable metal fixing mechanism;
Figure 9 is a perspective view of the top part of a second embodiment showing the fastening system of the top member, including a flanged metal cup to fix the wooden log part, which can then be inserted into the top of the main log;
Figure 10 is a view of a possible complex embodiment of the artificial demonstration and training structure, further including a lifting machine and additional external anchoring means.

### Detailed description of the invention

The invention concerns an artificial structure designed for demonstration and training activities of *tree climbing.*

The so-called *tree climbing* includes both recreational and sporting activities, such as tree climbing, and operational activities, such as, for example: pruning and cutting of branches, felling operations of the top of the trunk, removal of branches or portions of trunk by crane or helicopter or by cableway or by means of elevating work platforms.

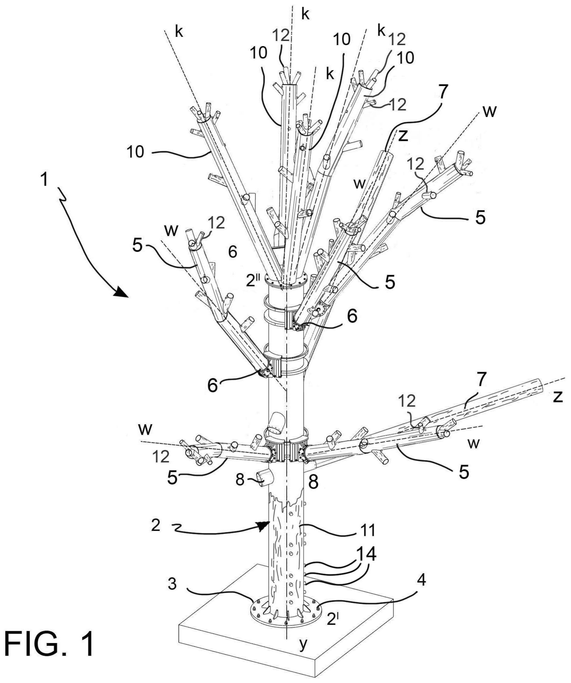

As shown in Figure 1, the structure of the invention, referred to as the artificial *tree climbing* structure 1, is composed of several interconnected components that simulate the natural environment of *tree-climbing activities,* providing a safe and controlled environment for practice and instruction.

The structure of the invention is preferably placed inside a sheltered and closed environment (*indoor*)*,* but it is not excluded that it can still be placed outdoors.

The core of the structure is represented by a central metal element 2 that extends along a longitudinal axis y from a lower end 2' to an upper end 2".

The lower end 2' of the central element 2 is firmly anchored by means of a base 3 fixed by means of appropriate means of connection 4 to the ground, floor or to a bottom plate.

Base 3 can, for example, be represented by a metal flange welded to the central metal element 2 and anchored to the flooring, by means of threaded rods embedded in the foundations, and nuts.

In an embodiment, the base 3 can also include suitable means of cushioning, represented for example by springs, which give mobility to the central element 2.

Base 3 may also include 14 anchoring means for climbing ropes, which are necessary to secure the operator while climbing the tree.

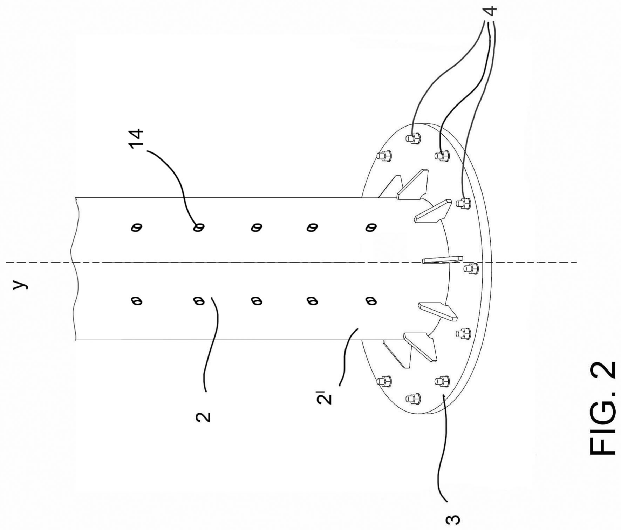

An example of the base is shown in Figure 2.

According to an embodiment, in order to improve the recreational, demonstration or training experience, the central metal element 2 can be anchored to the base 3 by means of an appropriate hinge connection system 4' (not shown in the figures), thus providing a certain constructive flexibility to the structure of the invention.

According to an embodiment of the invention, the central metal element 2 can be covered with cladding elements 11.

These cladding elements 11 are preferably made of wood, natural bark or materials that simulate wood or natural bark.

In this way, the recreational, demonstration or educational experience is advantageously enhanced.

In addition, these cladding elements 11 allow the progression and/or stationing of an operator on the central metal element 2 thus covered with crampons.

In accordance with the present invention, connected to the central metal element 2 are one or more first lateral elements 5, each of which extends, independently of each other, along its own longitudinal axis w.

The purpose of the first lateral elements 5 is to simulate firm and resistant branches, which, during demonstration or training operations, cannot be moved or cut with the cutting tools used for *tree climbing.*

For this purpose, these first side elements 5 are preferably made of metal or, alternatively, of another material with similar properties.

The first lateral elements 5 are connected to the central metal element 2 by means of appropriate first means of lateral connection 6, which can allow the rotation of the longitudinal axis w upwards and downwards and/or the rotation of the position of the lateral element 5 around the longitudinal axis y.

Such lateral means of connection 6 may, for example, be represented by a set of circular plates equipped with holes for adjusting the inclination of the longitudinal axis w of the lateral element 5, which can be fixed by means of bolts and/or pins.

The fixing of these plates to the central metal element 2 can be done by means of circular flanges that allow the angular position to be varied with respect to the longitudinal axis y.

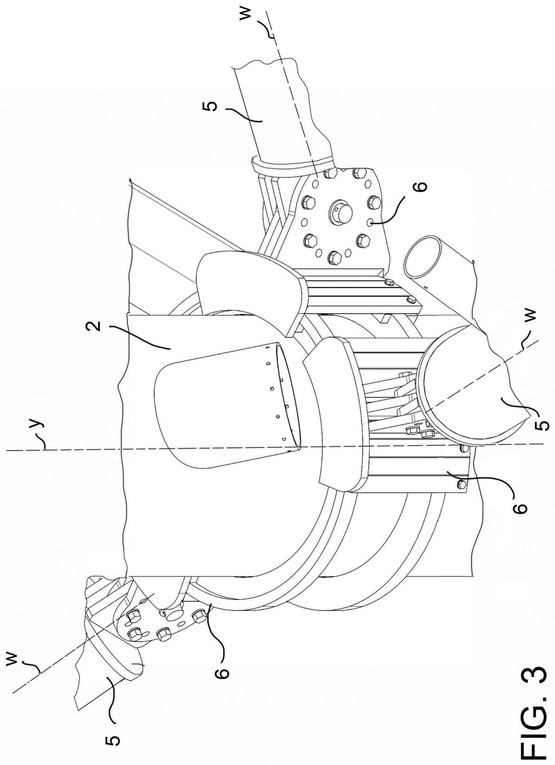

An example of these first means of lateral connection is shown in Figure 3.

In an alternative embodiment of the invention, these first lateral elements 5 are in a single piece with the central element 2.

The demonstration and training structure 1 of the present invention also includes second lateral elements 7, each of which extends, independently of each other, along its own longitudinal z-axis.

The purpose of these second side elements 7 is to offer elements on which cutting operations can be simulated.

For this purpose, these second side elements 7 are preferably made of wood or materials with wood-like properties.

For the purposes of the present invention, although wood is the preferred material, the use of materials that simulate the aesthetic or technical characteristics, such as weight or hardness, of wood is not excluded.

A further purpose of the second side elements 7 is to further simulate the natural environment of *tree climbing,* so as to improve the recreational, demonstration and training experience.

The second side elements 7 are connected to the central element 2 by means of appropriate second means of lateral connection 8.

These second means of lateral connection 8 can, for example, be represented by a metal tube passing through the central metal element 2, inside which it is possible to insert one of the second lateral elements 7 and fix it by means of screws inserted in appropriate holes in the tube.

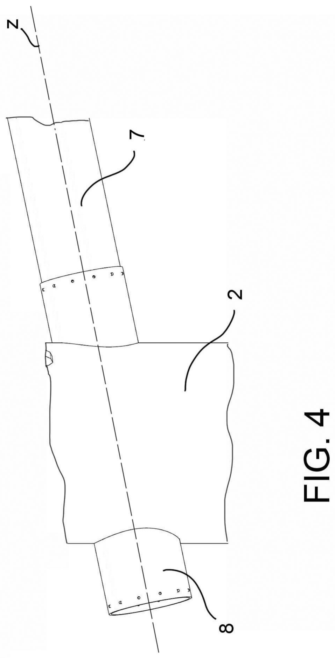

An example of these second means of lateral connection is shown in Figure 4.

For the purposes of the present invention, both the first means of lateral connection 6 and the second means of lateral connection 8 allow the attachment, independently of each other, of these lateral elements 6,8 at different heights from the base 3 of the central element 2 and/or at different inclinations with respect to the longitudinal axis y.

In some configurations, at least one of the first side elements 5 and/or at least one of the second side elements 7 is permanently and immovably connected to the central metal element 2.

According to an embodiment of the invention, the upper end 2" of the central metal element 2 also includes one or more upper elements 10, which extend, independently of each other, each along its own longitudinal axis k.

The purpose of these upper elements 10 is to enhance the recreational, demonstration or training experience and/or to offer additional solid and resistant anchor points which, during demonstration or training operations, are not movable or cuttable with the cutting tools used for *tree climbing.*

For this purpose, these upper elements 10 are preferably made of metal or, alternatively, of another material with similar properties.

For the purposes of the present invention, the upper elements 10 are connected to the central metal element 2 by means of upper connecting means 9, which allow the attachment, independently of each other, of one or more upper elements 10 at different inclinations with respect to the longitudinal axis y of the central metal element 2.

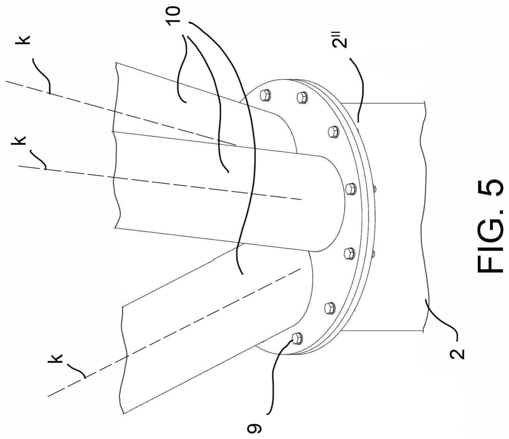

An example of a means of upper connection 9 is shown in Figure 5.

For the purposes of the present invention, one or more of the first side elements 5 and/or one or more of the upper elements 10 may be covered with cladding elements 11.

These cladding elements 11 are preferably made of wood, natural bark or materials that simulate wood or natural bark, enhancing the realistic appearance and the recreational, demonstration or educational experience.

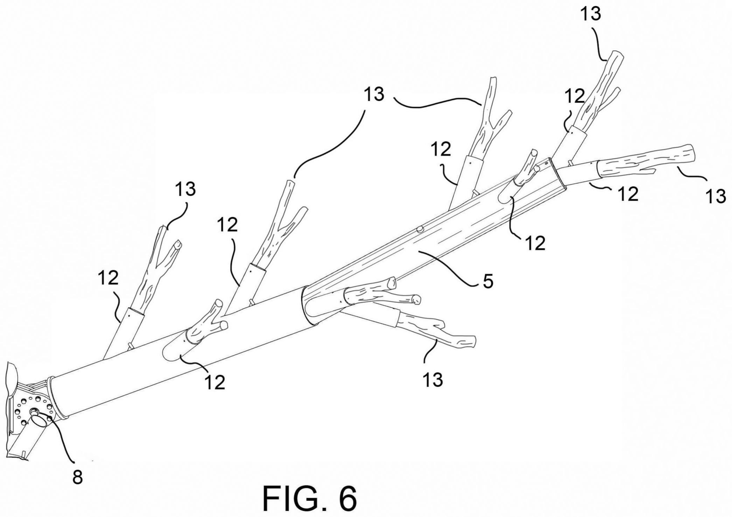

According to an embodiment shown for example in Figure 6, the structure of the invention can also include secondary side elements 12 connected to one or more of the first side elements 5 and/or to one or more of the second side elements 7 and/or to one or more of the upper elements 10.

For the purposes of the present invention, the secondary side elements 12 may be independently of each other fixed or rotatable and shall preferably be made of metal, possibly covered with the cladding elements 11 described above.

The secondary side elements 12 offer the possibility of inserting real branches or wooden twigs 13, intended to increase the realistic appearance of the artificial *tree climbing structure* 1 and allow the demonstration or training experience of cutting.

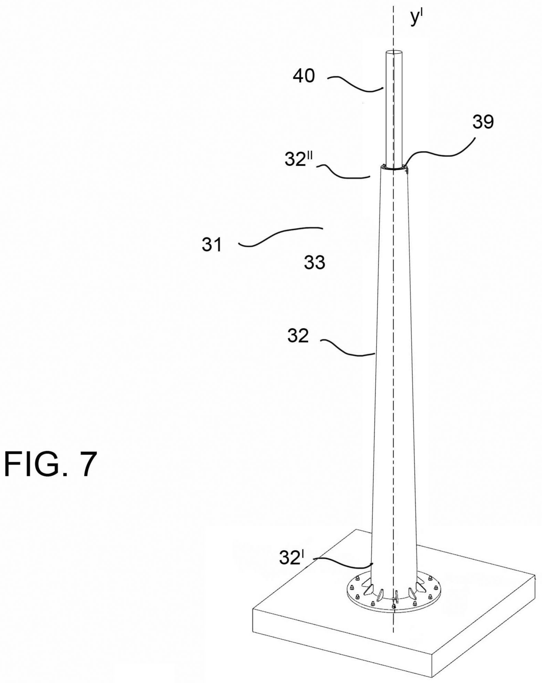

An embodiment of the invention is represented in Figure 7.

According to said embodiment, the artificial *tree climbing* structure 31 includes a central metal element 32 that extends from a lower end 32' to an upper end 32" along a longitudinal y' axis.

The lower end 32' of the central metal member 32 is still securely fixed by means of a base 33 fixed by means of appropriate means of connection 34 to the ground, floor or to a base plate.

Base 33 can, for example, be represented by a metal flange welded to the central metal element 2 and anchored to the flooring, by means of threaded rods embedded in the foundations, and nuts.

In a construction form, the base 33 can also include suitable means of cushioning, such as springs, which provide mobility to the central element 2.

According to an embodiment, in order to improve the recreational, demonstration or training experience, the central metal element 32 can be anchored to the base 33 by means of an appropriate hinge connection system 34' (not shown in the figures), thus providing a certain constructive flexibility to the structure of the invention.

The upper end 32'' of the central metal element 32 comprises a top element 40 fixed by means of upper means of connection 39.

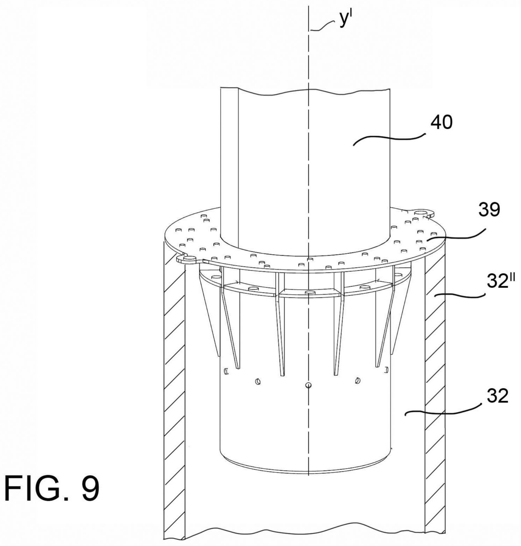

The upper means of connection 39 may be represented, for example, by a metal flanged socket suitably connected and fixed to the upper end 32" of the metal central element 32 (as shown in Figure 9).

The metal flanged socket can be removable in order to facilitate the installation of the top element 40.

The purpose of the top element 40 is to simulate a natural continuation of the trunk of a tree.

In such a way, the recreational, demonstration and training structure of the invention allows to recreate the environment in which activities carried out at the top of a tree, such as controlled cutting and felling, are carried out.

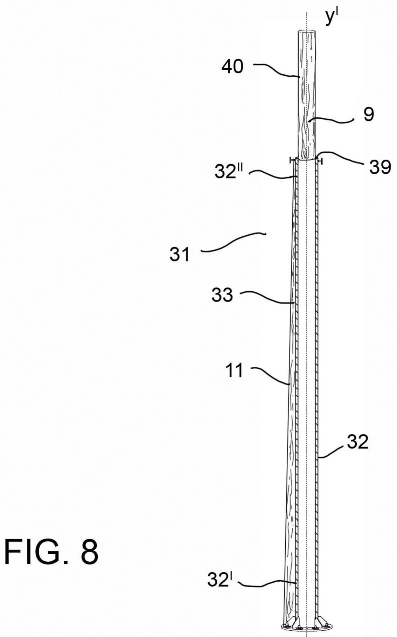

For this purpose, the top member 40 can be made of wood or wood-like materials (as shown in Figure 8).

According to a preferred construction form, the central metal element 32 can be covered with one or more cladding elements 33 in bark or wood, or materials that simulate bark or wood, to allow the progression and/or stationing of an operator on the central metal element 32 thus covered with crampons.

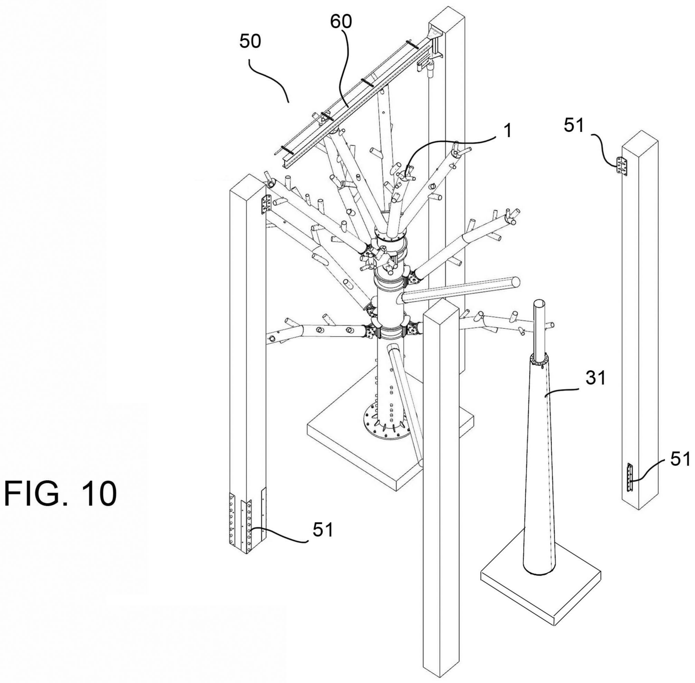

In accordance with a second object of the invention, for example represented in Figure 10, the present invention also describes a complex artificial structure 50 for *tree climbing activities.*

In particular, said complex artificial structure 50 comprises one or more of the demonstration and training structures of the invention described above 1,31 and further comprises a machine 60 for lifting and/or moving one or more components of said structure 50.

Said machine 60 can for example be represented by a crane, such as a jib crane, a bridge crane or a mobile crane.

The purpose of said machine 60 is to simulate demonstration and training operations.

Advantageously, said machine can also be used to facilitate the assembly, modification of the configuration and disassembly of the demonstration and training structure of the invention 1,31.

In addition, the complex structure 50 may include additional anchoring means 51 not included in the training structure 1,31 (external to it) as friction media, which may be placed at the same height as base 3,33 or higher.

Such anchoring means 51 may, for example, be represented by plates or angles, preferably made of metal, suitably fastened, for example, by means of bolts.

The purpose of these anchoring elements 51 is to simulate the anchoring that can be obtained and obtained, for example by means of ropes or cables, on a plan adjacent to the one on which one is working.

Where necessary, the demonstration and training artificial structure 1,31 or the complex artificial structure 50 of the present invention may be used in the presence of an elevating work platform (MEWP) for the purpose, for example, of simulating *tree climbing* activities with mechanical access, i.e. not by climbing on the tree.

To the forms of construction of the artificial structure described above, a technician of the sector, in order to meet contingent needs, may make modifications, adaptations and replacements of elements with others functionally equivalent, without departing from the scope of the following claims.

Each of the characteristics described as belonging to a possible embodiment can be realized independently of the other embodiments described.

## Claims

1. Artificial demonstrative and training structure for *tree climbing* activities (1) comprising a central metal element (2) that develops along a longitudinal axis y from a lower end (2') to an upper end (2") fixed to a base (3) by means of appropriate means of connection (4), and one or more first lateral elements (5) in metal, each of which develops independently of the others along its own longitudinal axis w, said first lateral elements (5) being connected to the central element (2) by means of appropriate first means of lateral connection (6), and second lateral elements (7) of wood or wood-like material, each of which develops independently of the others along its own longitudinal axis z, said one or more second lateral elements (7) being connected to the central element (2) by means of appropriate second means of lateral connection (8), where said first means of lateral connection (6) and said second means of lateral connection (8) allow to connect respectively and independently to each other one or more first lateral elements (5) and one or more second lateral elements (7) at different heights of said central metal element (2) along the longitudinal axis y and/or at different inclinations with respect to the longitudinal axis y.

2. The artificial demonstrative and training structure for *tree climbing* activities (1) according to the preceding claim, wherein at least one of the first side elements (5) and/or at least one of the second side elements (7) is permanently connected to the central metal element (2).

3. The artificial demonstrative and training structure for *tree climbing* activities (1) according to the preceding claim 1 or 2, wherein said central metal element (2) is hinged to the means of connection (4) of the base.

4. The artificial demonstration and training structure for *tree climbing* activities (1) according to any one of the preceding claims, wherein said means of connection (4) of the base (3) comprises anchoring means (14) for climbing ropes.

5. The artificial demonstration and training structure for *tree climbing* activities (1) according to any one of the preceding claims, wherein said upper end (2") comprises means of upper connection (9) for the connection of one or more upper elements (10) that develop along their own longitudinal axis k, wherein said means of upper connection (9) allow said one or more upper elements (10) to be connected independently with different inclinations of each longitudinal axis k with respect to said longitudinal axis y of the central metal element (2).

6. The demonstrative and formative artificial structure for *tree climbing* activities (1) according to any one of the preceding claims, wherein one or more of the said first side elements (5) and/or one or more of said upper elements (10) are covered with cladding elements (11) of wood or natural bark or of material simulating wood or natural bark.

7. The artificial demonstrative and training structure for *tree climbing* activities (1) according to any one of the preceding claims, wherein one or more of the said first side elements (5) and/or one or more of the said second side elements (7) and/or one or more of said upper elements (10) comprise one or more secondary side elements (12).

8. The artificial demonstrative and training structure for *tree climbing* activities (1) according to the preceding claim, wherein said one or more secondary lateral elements (12) are independently fixed or rotatable from each other.

9. The demonstrative and formative artificial structure for *tree climbing* activities (1) according to claim 7 or 8, wherein said one or more secondary lateral elements (12) allow the insertion of real branches or wooden twigs (13).

10. Artificial demonstration and training structure for *tree climbing* activities (31) comprising a central metal element (32) that develops from a lower end (32') to an upper end (32") along a longitudinal axis y', whose lower end (32') is fixed to a base (33) by means of appropriate means of connection (34) and whose upper end (32") comprises means of upper connection (39) for fixing a summit (40), wherein said top element (40) simulates a natural continuation of the trunk of a tree.

11. Artificial demonstrative and training structure for *tree climbing* activities (31) according to the preceding claim, wherein said top element (40) is made of wood or wood-like material.

12. Artificial demonstration and training structure for *tree climbing* activities (31) according to the preceding claim 10 or 11, wherein these means of upper connection (39) for fixing the top element (40) are represented by a metal flanged socket suitably connected and fixed to the upper end of the central metal element (32'').

13. Artificial demonstration and training structure for *tree climbing* activities (31) according to any one of claims 10 to 12, in which said central metal element (32) is covered with one or more cladding elements (33) in bark or wood or with materials simulating bark or wood, to allow progression and/or stationing on said central metal element (32) thus covered with crampons.

14. Artificial demonstration and training structure for *tree climbing* activities (31) according to any one of claims 10 to 13, wherein said metal core member (32) is the metal core member (2) according to any one of claims 1 to 9.

15. A complex artificial demonstration and training structure (50) for *tree climbing* activities comprising the artificial demonstration structure (1,31) according to any one of the preceding claims further comprising a machine (60) for lifting and/or moving one or more of: said metal central element (2,32), one or more of said first metal side elements (5), one or more of said first means of lateral connection (6), of one or more of said second lateral elements (7) made of wood, of one or more of said second means of lateral connection (8), of one or more of those upper elements (10), of those means of upper connection (39), of that top element (40).

16. Complex demonstration and training artificial structure (50) for *tree climbing* activities according to the preceding claim, wherein such machinery (60) for lifting and/or moving allows the assembly and/or assembly and/or modification and/or disassembly of the demonstration artificial structure (1,31) or simulates demonstration and training operations.

17. Complex artificial demonstration and training structure (50) for *tree climbing* activities according to claim 15 or 16 above, wherein such machinery (60) for lifting and/or moving is represented by a crane, such as a jib crane, a bridge crane or a mobile crane.

18. A complex artificial demonstration and training structure (50) for *tree climbing* activities including the artificial demonstration structure (1,31) according to any one of claims 1 to 14 further including external anchoring means (51) which are not comprised in the artificial demonstration structure (1,31) and which are represented, for example, by friction means.

19. The complex demonstrative and formative artificial structure (50) for *tree climbing* activities including the demonstrative artificial structure (1.31) according to the preceding claim, wherein these external means of anchoring (51) are positioned at the same height as the base (3,33) or at a higher height.
